# EUROPEAN PATENT APPLICATION

(11) **EP 4 016 671 A1**
(43) Date of publication of application: **22.06.2022**
(21) Application number: 20869799.5
(22) Date of filing: 24.09.2020
(51) Int. Cl.: H01M 4/14, H01M 4/62, H01M 4/74, H01M 10/06

(54) **NEGATIVE ELECTRODE PLATE FOR LEAD STORAGE BATTERY AND LEAD STORAGE BATTERY**

(30) Priority: 27.09.2019 JP 2019178090
(71) Applicant: GS Yuasa International Ltd., Kisshoin, Minami-ku, Kyoto-shi, Kyoto 601-8520 (JP)
(72) Inventor: HAMANO, Yasuyuki, Kyoto-shi, Kyoto 601-8520 (JP); TSUJINAKA, Akihito, Kyoto-shi, Kyoto 601-8520 (JP)
(74) Representative: Isarpatent
(86) International application number: PCT/JP2020/035915
(87) International publication number: WO 2021/060324

(57) **Abstract**

A negative electrode plate for a lead-acid battery, including a negative electrode current collector and a negative electrode material, where the negative electrode current collector includes: a frame rib part with an ear; and a grid part that is continuous with the frame rib part, the grid part has a plurality of quadrangular grids, the quadrangular grid has a pair of first vertexes with a diagonal line in a first direction from the frame rib part toward the grid part, and a pair of second vertexes with a diagonal line in a second direction intersecting the first direction, the angle θ made by two sides that form the second vertex is 55° or more and 100° or less, and the negative electrode material contains an organic condensate.

## Description

### TECHNICAL FIELD

The present invention relates to a negative electrode plate for a lead-acid battery and a lead-acid battery.

### BACKGROUND ART

Lead-acid batteries are in use for various applications, including automotive and industrial applications. A lead-acid battery includes a negative electrode plate, a positive electrode plate, and an electrolyte solution. The negative electrode plate includes a current collector and a negative electrode material. An organic expander is added to the negative electrode material. As the organic expander, synthesized organic expanders are also used in addition to naturally derived organic expanders such as sodium lignin sulfonate.

As an important index that indicates the performance of a lead-acid battery, a cold cranking current (CCA) is known. For example, as the 30-second terminal voltage after the start of discharge measured by a predetermined procedure is increased, the CCA performance is higher, and in general, a lead-acid battery that has higher CCA performance is more excellent in low-temperature high-rate performance.

Patent Document 1 teaches a negative electrode plate for a lead-acid battery, containing a lignin sulfonate dispersed in an active material layer, characterized in that the lignin sulfonate has an average molecular weight of 4,000 to 10,000 and a sulfonation ratio of 90% or more.

In addition, Patent Document 2 teaches a lead-acid battery in which a negative electrode plate contains an organic expander with a S element content of 3,900 µmol/g or more and 6,000 pmol/g or less, the ratio of the volume of an electrolyte solution to the total volume of positive and negative electrode plates is 1.8 or more and 3.0 or less, and the concentration of the organic expander in a negative electrode material is 0.05 mass% or more and 0.3 mass% or less, from the viewpoint of providing a lead-acid battery that has excellent low-temperature high-rate discharge performance and low-rate discharge performance within a practical range.

Further, Patent Document 3 proposes a valve regulated lead-acid battery characterized in that the ratio (W/V) of the mass W of a positive electrode expanded grid excluding the current collecting lug to the volume V of a positive electrode plate excluding a current collecting lug is 1.20 g/cm³ or more, the ratio (S/L) of the grid area S of the positive electrode expanded grid to the grid perimeter L of the positive electrode expanded grid is 2.3 mm or less, the angle of the included angle θ made by two sides of the grid of the expanded grid is less than 90°, and the apparent density of a positive active material filling the positive electrode expanded grid is 4.0 g/cm³ or more.

### PRIOR ART DOCUMENTS

### PATENT DOCUMENTS

Patent Document 1: JP-A-10-144305
Patent Document 2: JP-A-2019-53998
Patent Document 3: JP-A-2007-157613

### SUMMARY OF THE INVENTION

### PROBLEMS TO BE SOLVED BY THE INVENTION

Although the demand for improvement in low-temperature high-rate performance of lead-acid batteries has been increased year by year, the methods in Patent Documents 1 and 2 have difficulty in sufficiently meeting the increased demand.

### MEANS FOR SOLVING THE PROBLEMS

An aspect of the present invention relates to a negative electrode plate for a lead-acid battery, including a negative electrode current collector and a negative electrode material, where the negative electrode current collector includes: a frame rib part with an ear; and a grid part provided to be continuous with the frame rib part, the grid part has a plurality of quadrangular grids, the quadrangular grid has a pair of first vertexes with a diagonal line in a first direction from the frame rib part toward the grid part, and a pair of second vertexes with a diagonal line in a second direction intersecting the first direction, the angle θ made by two sides that form the second vertex is 55° or more and 100° or less, and the negative electrode material contains an organic condensate.

### ADVANTAGES OF THE INVENTION

The negative electrode plate for a lead-acid battery according to the present invention is capable of remarkably improving the low-temperature high-rate performance of the lead-acid battery.

### BRIEF DESCRIPTION OF THE DRAWINGS

Fig. 1 is a plan view illustrating the structure of a negative current collector.
Fig. 2 is an enlarged view of a grid part of the negative current collector of Fig. 1.
Fig. 3 is a partially cutaway exploded perspective view illustrating an appearance and an internal structure of a lead-acid battery.
Fig. 4 is a graph showing the relationship between the angle θ made by two sides that form a second vertex of the negative current collector and CCA performance.
Fig. 5 is a graph showing the relationship between the width L of a quadrangular grid of the negative current collector on the inside in a second direction and CCA performance, in the case where the angle θ made by two sides that form the second vertex of the negative current collector is 50°.
Fig. 6 is a graph showing the relationship between the width L of a quadrangular grid of the negative current collector on the inside in the second direction and CCA performance, in the case where the angle θ made by two sides that form the second vertex of the negative current collector is 80°.

### MODE FOR CARRYING OUT THE INVENTION

### [Lead-acid battery]

A lead-acid battery according to an embodiment of the present invention includes a negative electrode plate, a positive electrode plate, and an electrolyte solution containing a sulfuric acid, as described later.

The lead-acid battery may be either a valve regulated (sealed) lead-acid battery or a flooded-type (vented type) lead-acid battery.

In the present specification, the fully charged state of the flooded-type lead-acid battery is defined by the definition of JIS D 5301: 2006. More specifically, the following state is defined as a fully charged state: the lead-acid battery is charged in a water bath at 25°C ± 2°C at a current (A) 0.2 times as large as the numerical value of Ah described as a rated capacity until a terminal voltage during charge measured every 15 minutes or an electrolyte solution density subjected to temperature correction to 20°C exhibits a constant value at three significant digits continuously three times. In the case of a valve regulated lead-acid battery, the fully charged state is a state where the lead-acid battery is subjected to constant current constant voltage charge of 2.23 V/cell at a current (A) 0.2 times as large as the numerical value of Ah described as the rated capacity in an air tank of 25°C ± 2°C, and the charge is completed when the charge current (A) during constant voltage charge becomes 0.005 times as large as the numerical value described as the rated capacity. Note that the numerical value of Ah described as the rated capacity is a numerical value in which the unit is Ah. The unit of the current set based on the numerical value indicated as the rated capacity is A.

The lead-acid battery in the fully charged state refers to a battery obtained by fully charging a formed lead-acid battery. The full charge of the lead-acid battery may be performed immediately after formation so long as being performed after formation or may be performed after the lapse of time from formation. For example, a lead-acid battery in use (preferably at the initial stage of use) after formation may be fully charged. The battery at the initial stage of use refers to a battery that has not been used for a long time and has hardly deteriorated.

In addition, the CCA performance is evaluated at a 30-second terminal voltage after the start of discharge, measured by the following procedure in accordance with JIS D 5301: 2006. The startability is higher as the voltage is increased.
(a) After 1 to 5 hours of quiescence with full charge completed, the lead-acid battery is placed in a cooling room at -18°C ± 1°C for a minimum of 24 hours or until it can be confirmed that the electrolyte solution temperature of any cell in the center is -18°C ± 1°C.
(b) After the completion of cooling, the battery is discharged at CCA 310 A for 30 seconds.
(c) The 30-second terminal voltage after the start of discharge is recorded.

Hereinafter, the lead-acid battery according to an embodiment of the present invention will be described for each of the main constituent elements, but the present invention is not limited to the following embodiment.

### (Negative electrode plate)

The negative electrode plate fora lead-acid battery includes a negative current collector and a negative electrode material. The negative current collector includes a frame rib part with an ear and a grid part provided to be continuous with the frame rib part. The grid part has a plurality of quadrangular grids. The quadrangular grid has: a pair of first vertexes with a diagonal line in a first direction from the frame rib part toward the grid part; and a pair of second vertexes with a diagonal line in a second direction intersecting the first direction. In this regard, the angle θ made by two sides that form the second vertex (hereinafter, also simply referred to as an angle θ) is 55° or more and 100° or less.

The negative electrode material is a part of the negative electrode plate excluding the negative current collector. The negative electrode material contains an organic condensate as an organic expander. The organic expander refers to an organic compound among compounds having a function of suppressing shrinkage of lead as a negative active material when charge-discharge of the lead-acid battery are repeated. The organic expander encompasses organic condensates in addition to lignin compounds. The organic condensate is a synthetic product that can be obtained by using a condensation reaction, which encompasses no lignin compound. Note that the lignin compound commonly used in a lead-acid battery is a natural material, and thus excluded from the organic condensate, which is a synthetic product. The synthetic expander for use in the lead-acid battery is typically an organic condensate.

A member such as a mat or a pasting paper may be stuck to the negative electrode plate. Such a member (sticking member) is used integrally with the negative electrode plate, and thus included in the negative electrode plate. Also, when the negative electrode plate includes such a sticking member, the negative electrode material is a part of the negative electrode plate excluding the negative current collector and the sticking member. However, when the sticking member such as a mat is attached to a separator, a thickness of the sticking member is included in a thickness of the separator.

The negative electrode plate can be formed in such a manner that a negative current collector is coated or filled with a negative electrode paste, which is then cured and dried to prepare a non-formed negative electrode plate, and thereafter, the non-formed negative electrode plate is formed. The negative electrode paste is prepared by adding water and sulfuric acid to lead powder and an organic expander, and various additives as necessary, and mixing the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

Typically, the angle θ is set to about 50°. When the angle θ is larger than the foregoing angle, the quadrangular grids each accordingly become closer to a square, and the binding force between the negative current collector and the negative electrode material is believed to be decreased, thereby causing a crack at the interface between the negative current collector and causing the negative electrode material to fall off. In particular, in the case of an expanded grid, the degree of deployment with the first direction as a deployment direction is increased as the angle θ is increased. Accordingly, the stress remaining in the negative current collector is believed to be increased, thereby significantly causing a crack and causing the negative electrode material to fall off as mentioned above. These phenomena are predicted to negatively affect the current collection efficiency and degrade the CCA performance.

Against the general prediction as mentioned above, however, even in the case where the angle θ is increased to 55° or more, it has been found that the CCA performance can be improved as long as the angle θ is 100° or less depending on other conditions. More specifically, the CCA performance depends not only on the angle θ, but also on other conditions. In particular, in the case where the negative electrode material contains, not a lignin compound, but an organic condensate, it has been found that the CCA performance is improved when the angle θ is increased to 55° or more. The use of, in particular, a predetermined organic condensate described later remarkably improves the CCA performance. From the viewpoint of increasing the improvement range of the CCA performance, the angle θ may be 60° or more, 70° or more, or 80° or more. More specifically, the range of θ may be, for example, 55° to 100°, 60° to 100°, 70° to 100°, or 80° to 100°.

As a mechanism for remarkably improving the CCA performance, the following is presumed. First, the negative electrode material contains the organic condensate, thereby improving the binding force between the negative current collector and the negative electrode material. Unlike the naturally derived lignin compound, the organic condensate is likely to have a moiety that has a planar structure, formed in the molecule. Thus, the organic condensate once eluted is easily adsorbed to lead contained in the negative electrode plate. The organic condensate adsorbed to the interface between the current collector and the negative electrode material has an action to make the structure of spongy lead finer, improve the mechanical strength at the interface, and improve the binding force between the negative current collector and the negative electrode material. In contrast, the lignin compound has a complicated three-dimensional network structure, and is easily eluted from the negative electrode material as compared with the organic condensate. In addition, the lignin compound is inferior in adsorption to lead contained in the negative electrode plate as compared with the organic condensate. Thus, in the case of the lignin compound, it is difficult to obtain the effect of improving the binding force as mentioned above.

In contrast, increasing the angle θ to 55° or more is believed to reduce the voltage drop in the current collection path from the grid part toward the frame rib part. Then, the improvement of the binding force is believed to alleviate the negative effect on the current collection efficiency as mentioned above, thereby enhancing the effect of reducing the voltage drop in the current collection path, and remarkably improving the CCA performance. The degree of the improvement in CCA performance has a tendency to increase with increase in angle θ. When the angle θ exceeds 100°, however, the structural strength of the negative current collector can be apparently decreased. For achieving a favorable balance between the improvement of the CCA performance and the strength of the negative current collector, the angle θ may be set to be 100° or less.

### (Negative current collector)

The negative current collector may be formed by casting lead (Pb) or a lead alloy, or may be formed by processing a lead sheet or a lead alloy sheet. Examples of the processing method include expanding processing and punching processing. It is preferable to use a negative electrode grid as the negative current collector because the negative electrode material is easily supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug of the negative current collector. The surface layer of the lug may contain Sn or an Sn alloy.

Next, in the negative current collector, the width of the quadrangular grid on the inside in the second direction (hereinafter, referred to as a width L) may be 11 mm or more and 22.5 mm or less. As the width L is increased, the quadrangular grid becomes larger, and the total amount of grid ribs constituting the grid part is decreased. When the quadrangular grid becomes large, the binding force between the negative current collector and the negative electrode material becomes likely to be decreased, and the current collection efficiency becomes likely to be decreased. In addition, the decrease in the total amount of the grid ribs directly leads to the reduced current collection path, and reduces the interface between the negative current collector and the negative electrode material, thus also decreasing the binding force between the negative current collector and the negative electrode material. Accordingly, when the width L is 11 mm or more, the CCA performance is typically greatly degraded.

In contrast, in the case of increasing the angle θ to 55° or more, the degradation of the CCA performance is remarkably suppressed even in the case of increasing the width L to 11 mm or more. In the case where the negative electrode material contains an organic condensate, the decrease in CCA performance associated with increase in width L is further remarkably suppressed. This is believed to be because the effect of reducing the voltage drop in the current collection path as mentioned above is enhanced by increasing the angle θ to 55° or more and using the organic condensate. When the width L exceeds 22.5 mm, however, influences such as the decreased binding force between the negative current collector and the negative electrode material and the reduced current collection path are increased, in spite of the great effect of suppressing the decrease in CCA performance. From the viewpoint of securing sufficiently practical CCA performance, the width L is desirably set to be 22.5 mm or less.

Next, the negative current collector may be a punched grid or a cast grid, or may be an expanded grid with the first direction as a grid deployment direction as already described. The expanded grid facilitates the manufacture of a desired negative current collector, because the angle θ is easily controlled by deployment processing, and because the width L is also easily controlled by the slit processing before the deployment. In addition, the expanded grid has, because of the high stress remaining in the negative current collector, the enhanced effect of reducing the voltage drop in the current collection path and thus easily improves the CCA performance in the case of setting the angle θ to 55° or more and using an organic condensate, while typically, cracks at the interface between the negative current collector and the negative electrode material, the negative electrode material falling off, and the like are significantly caused. More specifically, in the case where the negative current collector is an expanded grid, it is extremely effective to set the angle θ to 55° or more and use an organic condensate.

Each of the plurality of quadrangular grids is surrounded by four grid ribs. When any one of the four grid ribs is cut perpendicular to the length direction to form a cross section, the cross section has a quadrangular shape. The length of two of the four sides constituting the quadrangle corresponds to the thickness of the negative current collector. In the case of an expanded grid or a punched grid, the length of two of the four sides constituting the quadrangle corresponds to the thickness of a lead or lead alloy sheet to be expanded or subjected to punching. In this regard, the length per side of the two sides corresponding to the thickness of the sheet is defined as x. In addition, the length per side of the other two sides is defined as y. The sides with the length y correspond to the front and back surfaces of the sheet to be expanded or subjected to punching. With the same thickness of the sheet, the mass of the negative current collector is increased as the ratio of y to x: y/x is increased, which is advantageous for the CCA performance. In addition, as y/x is increased, the negative current collector more easily maintains sufficient strength even when the angle θ is increased, and more easily prevents cracks and the negative electrode material from falling off. y/x is, for example, preferably more than 0.75, more preferably 0.8 or more and 1.4 or less, and still more preferably 0.85 or more and 1.1 or less.

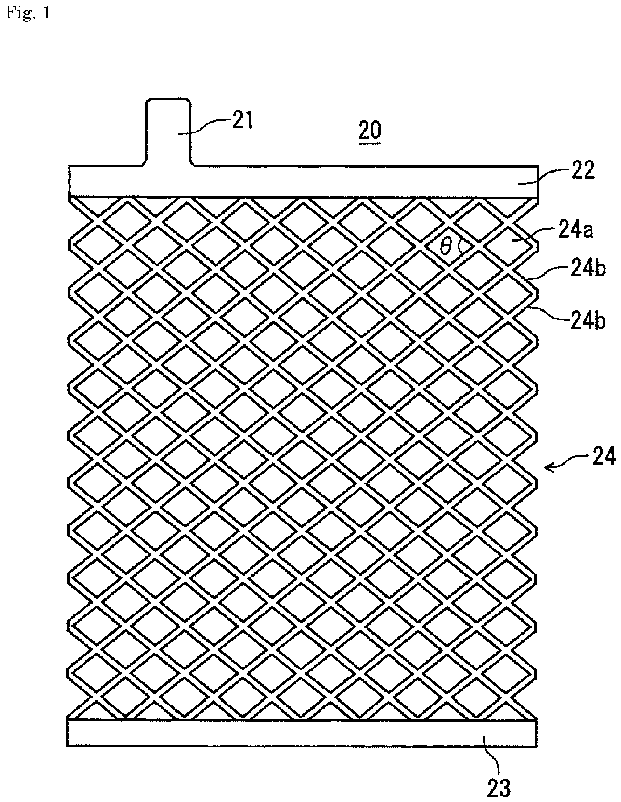

Fig. 1 shows a plan view of an example of a negative current collector according to an embodiment of the present invention. The negative current collector shown in Fig. 1 is an expanded grid. The expanded grid 20 includes an upper frame rib part 22 with an ear 21, a lower frame rib part 23 opposed to the upper frame rib part 22, and a grid part 24 that is continuous with the upper frame rib part 22 and the lower frame rib part 23. The grid part 24 has grid ribs 24b that form a plurality of quadrangular grids 24a.

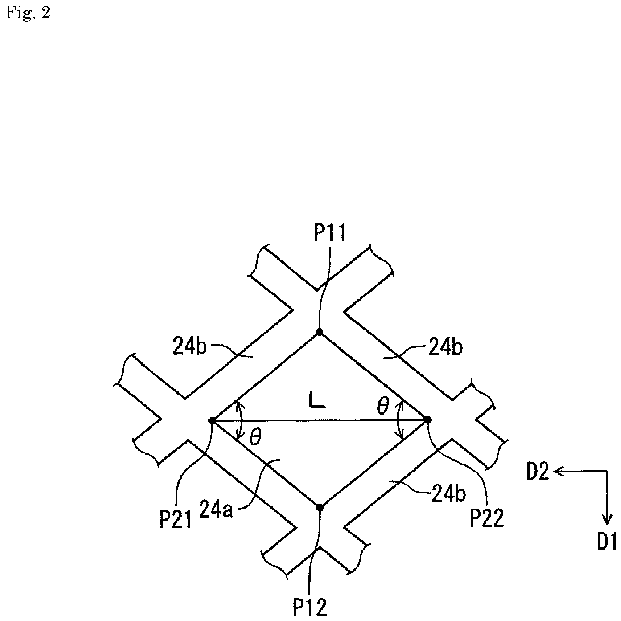

Fig. 2 shows an enlarged view of the grid part 24 of the expanded grid 20. The quadrangular grid 24a has a pair of first vertexes P11 and P12 with a diagonal line in a first direction D1, and a pair of second vertexes P21 and P22 with a diagonal line in a second direction D2 intersecting the first direction D1, and the angles θ formed by two sides that form the second vertexes P21 and P22 are each 55° or more and 100° or less. The width L of the quadrangular grid 24a on the inside in the second direction D2 corresponds to the distance between the second vertexes P21 and P22.

### (Negative electrode material)

The negative electrode material contains a negative active material (lead or lead sulfate) that exhibits a capacity through a redox reaction. The negative electrode material may contain at least one selected from the group consisting of an organic expander, a carbonaceous material, and other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

### (Organic expander)

As already described, the negative electrode material contains an organic condensate as an organic expander. As the organic expander, for example, a product synthesized by a known method may be used, or a commercially available product may be used. The negative electrode material may contain one of, or two or more of organic expanders.

The negative electrode material may contain a lignin compound as the organic expander, but contains at least an organic condensate as an organic expander other than the lignin compound from the viewpoint of improving the binding force between the negative current collector and the negative electrode material.

In this regard, the lignin compounds encompass lignin derivatives in addition to lignin. The lignin derivatives include derivatives that have a lignin-like three-dimensional structure. Examples of the lignin derivatives include at least one selected from the group consisting of modified lignin, lignin sulfonic acids, modified lignin sulfonic acids, and salts thereof (alkali metal salts (sodium salts, etc.), magnesium salts, calcium salts, etc.).

The organic condensate (hereinafter, referred to simply as a condensate) as an organic expander is a synthetic product, and also generally referred to as a synthetic expander. The condensate may include a unit of an aromatic compound (hereinafter, also referred to as an aromatic compound unit). The aromatic compound unit refers to a unit derived from an aromatic compound incorporated in a condensate. More specifically, the aromatic compound unit is a residue of an aromatic compound. The condensate may contain one or more aromatic compound units.

Examples of the condensate include a condensate of an aromatic compound with an aldehyde compound. Such a condensate can be synthesized by reacting an aromatic compound with an aldehyde compound. In this regard, a condensate containing a sulfur element can be obtained by developing the reaction between the aromatic compound and the aldehyde compound in the presence of a sulfite or using an aromatic compound containing a sulfur element (for example, bisphenol S or the like) as the aromatic compound. For example, the sulfur element content in the condensate can be adjusted by adjusting the amount of sulfite and/or the amount of the aromatic compound containing sulfur element. Also in the case of using other raw materials, the condensate may be obtained in accordance with this method. The aromatic compound to be condensed for obtaining the condensate may have one, or two or more aromatic compounds. Note that the aldehyde compound may be an aldehyde (for example, a formaldehyde), or may be a condensate of an aldehyde, or the like.

The aromatic compound may have a sulfur-containing group. More specifically, the condensate may be an organic polymer containing, in the molecule, a plurality of aromatic rings and containing a sulfur element as a sulfur-containing group. The sulfur-containing group may be directly bonded to the aromatic ring of the aromatic compound, and for example, may be bonded to the aromatic ring as an alkyl chain having a sulfur-containing group. Among the sulfur-containing groups, a sulfonic acid group or a sulfonyl group which is in a stable form is preferable. The sulfonic acid group may exist in an acid form, or may exist in a salt form like a Na salt.

The sulfur-containing group is a functional group with a strong negative polarity. Such a functional group forms stable bonds with water molecules, hydrogen ions, and hydrogen sulfate ions in the electrolyte solution, and thus has a tendency to be unevenly distributed on the surface of the condensate. Because the functional group unevenly distributed on the surface has a charge, electrostatic repulsion is caused between associates of the condensate, thereby limiting association of the colloidal particles of the condensate, and making the colloidal particle size more likely to be reduced. As a result, the pore size of the negative electrode material and the specific resistance of the negative electrode material are believed to become more likely to be respectively reduced and decreased. In this regard, the condensate including the aromatic compound unit having a sulfur-containing group is believed to have the enhanced effect of making the spongy lead structure finer also at the interface between the current collector and the negative electrode material, thereby allowing the mechanical strength at the interface and the adhesive force to be improved. As described above, the condensate including the aromatic compound unit having a sulfur-containing group has the enhanced effect of improving the binding force between the negative current collector and the negative electrode material.

Examples of the aromatic ring of the aromatic compound include a benzene ring, a naphthalene ring, and the like. When the aromatic compound has a plurality of aromatic rings, the plurality of aromatic rings may be linked by a direct bond, a linking group (for example, an alkylene group (including an alkylidene group), a sulfone group, and the like), or the like. Examples of such a structure include bis-arene structures (biphenyl, bisphenylalkane, bisphenylsulfone, and the like).

Examples of the aromatic compound include compounds having the aromatic ring and a functional group such as a hydroxy group od an amino group. The functional group such as a hydroxy group or an amino group may be directly bonded to the aromatic ring, or may be bonded as an alkyl chain having the functional group. Note that the hydroxy group also includes salts of hydroxy group (-OMe). The amino group also includes salts of amino group (salts with anion). Examples of Me include alkali metals (Li, K, Na, and the like), Group 2 metals of the periodic table (Ca, Mg, and the like), and the like.

The hydroxy group of the aromatic compound is preferably a phenolic hydroxy group. The condensate of an aromatic compound having a phenolic hydroxy group with an aldehyde compound is mainly condensed in at least one of an ortho position and a para position (particularly an ortho position) with respect to the phenolic hydroxy group. In contrast, the condensate of a monocyclic aromatic compound having an amino group with an aldehyde compound is condensed with an amino group interposed. Thus, in the case of using a monocyclic aromatic compound having a phenolic hydroxy group, as compared with the case of using a monocyclic aromatic compound having an amino group, the aromatic rings in the organic expander molecules are less twisted with each other, and more likely to have a planar structure, thereby more easily acting on lead. In addition, in the case of the phenolic hydroxy group, as compared with the case of an amino group or the like, the organic condensate is easily negatively charged, thus easily achieving high adsorption to lead.

In contrast, in the case where the organic condensate has a nitrogen atom-containing group such as an amino group, the organic condensate is less negatively charged. Thus, the content of the nitrogen atom-containing group in the organic condensate is preferably lower. The nitrogen atom content in the organic expander is preferably 1% by mass or less, and may be 0.1% by mass or less.

The aromatic compound as a base for the aromatic compound unit may contain at least one selected from the group consisting of a bis-arene compound and a monocyclic compound. In this case, even in the case where the lead-acid battery experiences an environment at a higher temperature than normal temperature, the condensate can be kept from aggregating in the negative electrode material, the microstructure of the negative electrode material is prevented from being coarsened, and the low-temperature high-rate performance tends to be less impaired.

Examples of the bis-arene compound include a bisphenol compound, a hydroxybiphenyl compound, and a bis-arene compound having an amino group (a bisarylalkane compound having an amino group, a bisarylsulfone compound having an amino group, a biphenyl compound having an amino group, and the like). Among the compounds, the bisphenol compound is preferable.

As the bisphenol compound, bisphenol A, bisphenol S, bisphenol F, and the like are preferable. For example, the bisphenol compound may contain at least one selected from the group consisting of bisphenol A and bisphenol S. In particular, the condensate including a unit of bisphenol S has a sulfur-containing group, and allows more functional groups with a strong negative polarity to present on the surface of the condensate, thus further enhancing the effect of improving the binding force between the negative current collector and the negative electrode material. In the case where the bisphenol compound contains both bisphenol A and bisphenol S, the molar ratio between bisphenol A and bisphenol S may fall within, for example, the range of 1 : 9 to 9 : 1, and preferably falls within the range of 2 : 8 to 8 : 2.

The bisphenol compound may have a bisphenol skeleton, and the bisphenol skeleton may have a substituent. More specifically, the bisphenol A may have a bisphenol A skeleton, and the skeleton may have a substituent. The bisphenol A may have a bisphenol S skeleton, and the skeleton may have a substituent.

As the monocyclic compound, hydroxy arene compounds, aminoarene compounds, and the like are preferable. In particular, the hydroxyarene compounds are preferable.

Examples of the hydroxy arene compounds include a hydroxynaphthalene compound and a phenol compound. For example, it is preferable to use a phenol sulfonic acid compound (a phenol sulfonic acid or a substituted product thereof) that is a phenol compound. The condensate including a unit of a phenol sulfonic acid compound has a phenolic hydroxy group and a sulfonic acid group. The phenolic hydroxy group and the sulfonic acid group both have a strong negative polarity, and have high affinity for metals. In addition, the phenolsulfonic acid makes the condensate likely to have a planar structure. Thus, the condensate including the unit of the phenol sulfonic acid compound is also likely to adsorb to the negative current collector, thus resulting in the particularly great effect of improving the binding force between the negative current collector and the negative electrode material. In addition, the condensate including the unit of the phenol sulfonic acid compound is low in solubility in the electrolyte solution (sulfuric acid aqueous solution), and likely to remain in the negative electrode material even when a deep discharge cycle is repeated. Accordingly, the great effect of suppressing the expansion of the negative electrode material is achieved. Note that the phenolic hydroxy group also encompasses a salt (-OMe) of the phenolic hydroxy group as mentioned already.

Examples of the aminoarene compounds include aminonaphthalene compounds and aniline compounds (aminobenzenesulfonic acids, alkylaminobenzenesulfonic acids, etc.).

The aromatic compound as a base for the aromatic compound unit may contain both a bis-arene compound and a monocyclic compound. The reason therefor is believed to be because the monocyclic compound can inhibit the bond formation in the molecule by interaction between π electrons of the aromatic ring, which is a characteristic of the bis-arene compound, thereby imparting flexibility to the linear chain of the molecule. Thus, more functional groups with a negative polarity are believed to be easily exposed at the surface.

In the case where the aromatic compound as a base for the aromatic compound unit contains both a bis-arene compound and a monocyclic compound, the molar ratio between the bis-arene compound and the monocyclic compound may fall within, for example, the range of 1 : 9 to 9 : 1, and preferably falls within the range of 2 : 8 to 8 : 2.

The sulfur element content of the organic condensate may be, for example, 2,000 µmol/g or more, and is preferably 3,000 pmol/g or more. In this case, with the large quantity of the sulfur-containing group contained of the organic condensate, the colloidal particle size of the organic condensate is likely to be reduced, and the structure of the negative electrode material can be finely maintained, and thus, the low-temperature high-rate characteristics are likely to be kept from being degraded. The organic condensate may, however, also encompass compounds with the sulfur element content being less than 2,000 µmol/g.

The sulfur element content in the organic condensate being X pmol/g means that the content of the sulfur element contained per 1 g of the organic condensate is X pmol.

The upper limit of the sulfur element content of the organic condensate is not particularly limited, but may be, for example, 9,000 pmol/g or less, 8,000 pmol/g or less, or 7,000 pmol/g or less. These lower limit values and upper limit values can be combined arbitrarily.

The sulfur element content of the organic condensate may be, for example, 2,000 pmol/g or more (or 3,000 pmol/g or more) and 9,000 pmol/g or less, 2,000 pmol/g or more (or 3,000 pmol/g or more) and 8,000 pmol/g or less, or 2,000 pmol/g or more (or 3,000 pmol/g or more) and 7,000 pmol/g or less.

The weight average molecular weight (Mw) of the organic condensate is preferably, for example, 7,000 or more. The Mw of the organic condensate is, for example, 100,000 or less, and may be 20,000 or less.

Note that in the present specification, the Mw of the organic condensate or organic expander is determined by GPC. A standard substance used for determining the Mw is sodium polystyrene sulfonate.

The Mw is measured under the following conditions using the following apparatus.
GPC apparatus: Build-up GPC system SD-8022/DP-8020/AS-8020/CO-8020/UV-8020 (manufactured by Tosoh Corporation)
Column: TSKgel G4,000SWXL, G2,000SWXL (7.8 mm I.D. × 30 cm) (manufactured by Tosoh Corporation)
Detector: UV detector, λ = 210 nm
Eluent: Mixed solution of NaCl aqueous solution having a concentration of 1 mol/L : acetonitrile (volume ratio = 7 : 3)
Flow rate: 1 mL/min.
Concentration: 10 mg/mL
Injection amount: 10 pL
Standard substance: Na polystyrene sulfonate (Mw = 275,000, 35,000, 12,500, 7,500, 5,200, 1,680)

In the case where the negative electrode material contains a lignin compound in addition to the organic condensate, the sulfur element content of the lignin compound is, for example, 1,000 pmol/g or less, and may be 800 pmol/g or less. The lower limit of the sulfur element content in the lignin compound is not particularly limited, and is, for example, 400 pmol/g or more.

The Mw of the lignin compound is, for example, less than 7,000. The Mw of the lignin compound is, for example, 3,000 or more.

When the organic condensate and the lignin compound are used in combination, the mass ratio thereof can be arbitrarily selected. From the viewpoint of remarkably improving the binding force between the negative current collector and the negative electrode material, however, the ratio of the organic condensate to the total amount of the organic condensate and the lignin compound is preferably 20% by mass or more, and may be 50% by mass or more, or 80% by mass or more.

The content of the organic expander contained in the negative electrode material is, for example, 0.01% by mass or more and may be 0.05% by mass or more. The content of the organic expander is, for example, 1.0% by mass or less and may be 0.5% by mass or less. These lower limit values and upper limit values can be combined arbitrarily.

The content of the organic expander contained in the negative electrode material may be 0.01% by mass or more and 1.0% by mass or less, 0.05% by mass or more and 1.0% by mass or less, 0.01% by mass or more and 0.5% by mass or less, or 0.05% by mass or more and 0.5% by mass or less.

### (Barium sulfate)

The negative electrode material can contain a barium sulfate. The content of barium sulfate in the negative electrode material is, for example, 0.05% by mass or more and may be 0.10% by mass or more. The content of barium sulfate in the negative electrode material is 3% by mass or less and may be 2% by mass or less. These lower limit values and upper limit values can be combined arbitrarily.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

### (Carbonaceous material)

The negative electrode material can contain a carbonaceous material. As the carbonaceous material, carbon black, graphite, hard carbon, soft carbon, and the like can be used. Examples of the carbon black include acetylene black, furnace black, and lamp black. Furnace black also includes ketjen black (product name). The graphite may be a carbonaceous material including a graphite-type crystal structure and may be either artificial graphite or natural graphite. One kind of carbonaceous material may be used alone, or two or more kinds thereof may be used in combination.

The content of the carbonaceous material in the negative electrode material is, for example, preferably 0.05% by mass or more and may be 0.10% by mass or more. The content of the carbonaceous material is, for example, 5% by mass or less and may be 3% by mass or less. These lower limit values and upper limit values can be combined arbitrarily.

The content of the carbonaceous material in the negative electrode material may be, for example, 0.05% by mass or more and 5% by mass or less, 0.05% by mass or more and 3% by mass or less, 0.10% by mass or more and 5% by mass or less, or 0.10% by mass or more and 3% by mass or less.

### (Analysis of constituent components of negative electrode material)

Hereinafter, a method of analyzing the negative electrode material or constituent components thereof will be described. Prior to analysis, a lead-acid battery after formation is fully charged and then disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed from the negative electrode plate by peeling. Next, the negative electrode material is separated from the negative electrode plate to obtain a sample (hereinafter referred to as sample A). The sample A is ground as necessary and subjected to analysis.

### (1) Analysis of organic expander (organic condensate)

### (1-1) Qualitative analysis of organic expander in negative electrode material

The sample A ground is immersed in a 1 mol/L sodium hydroxide (NaOH) aqueous solution to extract the organic expander. Next, in the case where the extract contains multiple organic expanders, the multiple organic expanders are separated from the extract. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is specified by using, in combination, information obtained from an infrared spectroscopic spectrum measured with the use of the sample B of the organic expander obtained in the manner described above, an ultraviolet-visible absorption spectrum measured by an ultraviolet-visible absorption spectrometer after the sample B is diluted with distilled water or the like, an NMR spectrum of a solution obtained by dissolving the sample B with a predetermined solvent such as heavy water, or the like.

Note that in the case where the extract contains multiple organic expanders, the organic expanders are separated as follows.

First, the extract is measured by at least one of infrared spectroscopy, NMR, and GC-MS to determine whether or not a plurality of types of organic expanders are contained. Next, a molecular weight distribution is measured by GPC analysis of the extract, and if the plurality of types of organic expanders can be separated by molecular weight, the organic expander is separated by column chromatography based on a difference in molecular weight.

The organic expanders vary in solubility when the functional groups vary in at least one of type and amount. In the case where it is difficult to separate the organic expanders with the difference in molecular weight, one of the organic expanders is separated by a precipitation separation method with the use of such a difference in solubility. For example, in the case of containing two types of organic expanders, an aqueous sulfuric acid solution is added dropwise to a mixture obtained by dissolving the extract in an NaOH aqueous solution to adjust the pH of the mixture, thereby aggregating and separating one of the organic expanders. In the case where it is difficult to separate the organic expanders with the aggregation, the organic expanders are separated by ion exchange chromatography or affinity chromatography with the use of a difference in at least one of the type and amount of the functional group. The insoluble component is removed by filtration as described above from the separated material dissolved again in the NaOH aqueous solution. The remaining solution after separating one of the organic expanders is concentrated. The obtained concentrate contains the other organic expander, and the insoluble component is removed from the concentrate by filtration as described above.

### (1-2) Quantitative determination of content of organic expander in negative electrode material

Similarly to (1-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured with the use of the ultraviolet-visible absorption spectrum by creating a calibration curve using the organic expander extracted from the negative electrode of the battery and a separately available organic polymer in which the ultraviolet-visible absorption spectrum, the infrared spectroscopic spectrum, the NMR spectrum, and the like exhibit similar shapes.

### (1-3) Content of sulfur element in organic expander

Similarly to (1-1) above, after a sample B of the organic expander is obtained, sulfur element in 0.1 g of the organic expander is converted into sulfuric acid by an oxygen combustion flask method. At this time, the sample B is burned in a flask containing an adsorbent to obtain an eluate in which sulfate ions are dissolved in the adsorbent. Next, the eluate is titrated with barium perchlorate with thorin as an indicator to determine the content (C1) of the sulfur element in 0.1 g of the organic expander. Next, C1 is multiplied by 10 to calculate the content (µmol/g) of the sulfur element in the organic expander per 1 g.

### (1-4) Analysis of sulfur element content in organic expander

Similarly to (1-1) above, after a sample B of the organic expander is obtained, the nitrogen atom content in the organic expander is determined by analyzing the sample B with the use of an organic element analyzer (CHN analyzer).

### (2) Quantitative determination of carbonaceous material and barium sulfate

To 10 g of crushed sample A, 50 ml of nitric acid having a concentration of 20% by mass is added, and the mixture is heated for about 20 minutes to dissolve a lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The obtained sample is a mixed sample of carbonaceous material and barium sulfate (hereinafter, referred to as a sample C). A mass (Mₘ) of the sample C is measured by subtracting the mass of the membrane filter from the total mass of the dried sample C and the membrane filter. Thereafter, the dried sample C is placed in a crucible together with a membrane filter and is burned and incinerated at 700°C or higher. The residue remaining is barium oxide. The mass (M_{B}) of barium sulfate is determined by converting the mass of barium oxide to the mass of barium sulfate. The mass of the carbonaceous material is calculated by subtracting the mass M_{B} from the mass Mₘ.

### (Positive electrode plate)

The positive electrode plate of a lead-acid battery can be classified into a paste type, a clad type, and the like. The paste-type positive electrode plate includes a positive current collector and a positive electrode material. The positive electrode material is held by the positive current collector. In the paste-type positive electrode plate, the positive electrode material is obtained by removing the positive current collector from the positive electrode plate. The positive current collector may be formed by casting lead (Pb) or a lead alloy, or may be formed by processing a lead sheet or a lead alloy sheet. Examples of the processing method include expanding and punching. It is preferable to use a grid-like current collector as the positive current collector because the positive electrode material is easily supported. The clad-type positive electrode plate includes a plurality of porous tubes, a spine inserted into each tube, a current collector coupling the plurality of spines, a positive electrode material with which a spine inserted tube is filled, and a joint that couples the plurality of tubes. For the clad-type positive electrode plate, the positive electrode material is a part of the positive electrode plate excluding the tube, the spine, the current collector, and the joint. In the clad-type positive electrode plate, the spine and the current collector may be collectively referred to as a positive current collector.

A member such as a mat or a pasting paper may be stuck to the positive electrode plate. Such a member (sticking member) is used integrally with the positive electrode plate, and thus included in the positive electrode plate. Also, in the case where the positive electrode plate includes such a member, the positive electrode material is a part of the positive electrode plate excluding the positive current collector and the sticking member for the paste-type positive electrode plate.

As a lead alloy used for the positive current collector, a Pb-Sb-based alloy, a Pb-Ca-based alloy, and a Pb-Ca-Sn-based alloy are preferable in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid portion, only on the lug portion, or only on the frame rib portion of the positive current collector.

The positive electrode material contained in the positive electrode plate contains a positive active material (lead dioxide or lead sulfate) that exhibits a capacity through a redox reaction. The positive electrode material may optionally contain another additive.

A non-formed paste-type positive electrode plate is obtained by filling a positive current collector with a positive electrode paste, and curing and drying the paste. The positive electrode paste is prepared by mixing lead powder, an additive, water, and sulfuric acid. A non-formed clad-type positive electrode plate is formed by filling a porous tube, into which a spine connected by a current collector is inserted with lead powder or a slurry-like lead powder, and joining a plurality of tubes with a joint. Thereafter, the positive electrode plate is obtained by forming the non-formed positive electrode plates. The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

### (Separator)

The separator can be disposed between the negative electrode plate and the positive electrode plate. As the separator, at least one selected from a nonwoven fabric and a microporous membrane are used. The thickness of separators interposed between the negative electrode plate and the positive electrode plate may be selected in accordance with the distance between the electrodes. The number of separators only needs to be selected in accordance with the number of poles.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, etc.), etc.), pulp fibers, and the like. Among them, glass fibers are preferable. The nonwoven fabric may contain components in addition to the fibers, such as acid-resistant inorganic powder, and a polymer as a binder.

On the other hand, the microporous film is a porous sheet mainly made of components except for fiber components and is obtained by, for example, extrusion molding a composition containing, for example, a pore-forming additive (polymer powder, oil, and/or the like) into a sheet shape and then removing the pore-forming additive to form pores. The microporous film is preferably made of a material having acid resistance and is preferably composed mainly of a polymer component. As the polymer material, a polyolefin (polyethylene, polypropylene, etc.) is preferable.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded portion is along the horizontal direction of the lead-acid battery (e.g., such that the bent portion may be parallel to the horizontal direction), and the separator may be disposed such that the folded portion is along the vertical direction (e.g., such that the bent portion is parallel to the vertical direction). In the separator folded in the bellows shape, recesses are alternately formed on both main surface sides of the separator. The lug is typically formed at the upper portion for each of the positive electrode plate and the negative electrode plate, and thus, when the separator is disposed such that the folded portions are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate.

Note that, in the present specification, in the plate, the up-down direction is defined with a side on which a lug is provided as an upper side and a side opposite to the lug as a lower side. The up-down direction of the plate may be identical to or different from the up-down direction of the lead-acid battery in the vertical direction. More specifically, the lead-acid battery may be either vertically or horizontally placed.

### (Electrolyte solution)

The electrolyte solution is an aqueous solution containing sulfuric acid and may be gelled as necessary. The electrolyte solution may contain at least one selected from the group consisting of cations (for example, metal cations) and anions (for example, anions other than sulfate anions (such as phosphate ions)), if necessary. Examples of the metal cations include at least one selected from the group consisting of a sodium ion, a lithium ion, a magnesium ion, and an aluminum ion.

The specific gravity of the electrolyte solution in the lead-acid battery in the fully charged state at 20°C is, for example, 1.20 or more and may be 1.25 or more. The specific gravity of the electrolyte solution at 20°C is 1.35 or less and preferably 1.32 or less. These lower limit values and upper limit values can be combined arbitrarily. The specific gravity of the electrolyte solution at 20°C may be 1.20 or more and 1.35 or less, 1.20 or more and 1.32 or less, 1.25 or more and 1.35 or less, or 1.25 or more and 1.32 or less.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. The assembly process of the lead-acid battery may include a step of forming at least one of the positive electrode plate and the negative electrode plate, if necessary, after the step of housing the positive electrode plate, the negative electrode plate, and the electrolyte solution in the container. The positive electrode plate, the negative electrode plate, the electrolyte solution, and the separator are each prepared before being housed in the container.

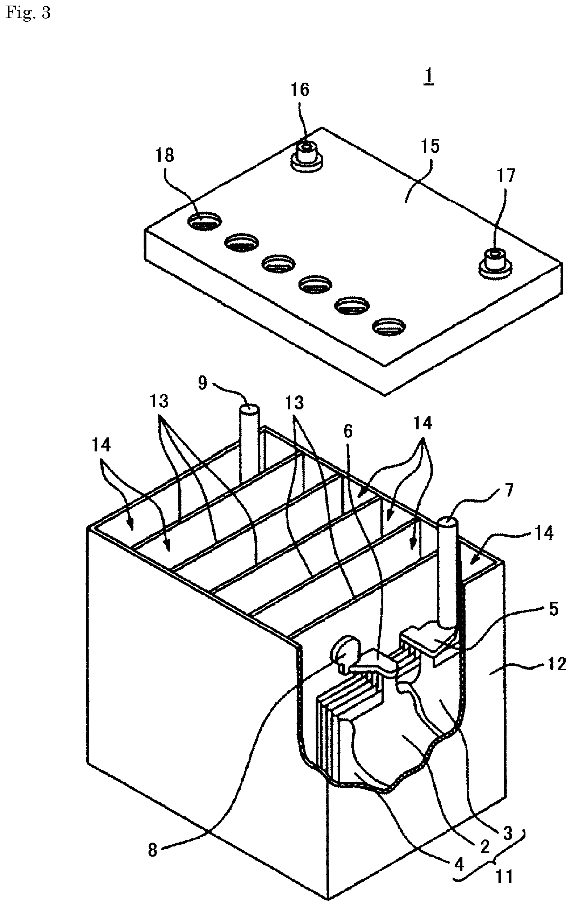

Fig. 3 shows an appearance of an example of a lead-acid battery according to an embodiment of the present invention.

A lead-acid battery 1 includes a container 12 that houses an element 11 and an electrolyte solution (not shown). The inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and positive electrode plates 3 with a separator 4 interposed therebetween. Here, the bag-shaped separator 4 housing the negative electrode plate 2 is shown, but the form of the separator is not particularly limited. In the cell chamber 14 located at one end of the container 12, a negative electrode shelf portion 6 for connecting the plurality of negative electrode plates 2 in parallel is connected to a penetrating connection body 8, and a positive electrode shelf portion 5 for connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf portion 6, and the penetrating connection body 8 is connected to the positive electrode shelf portion 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.

The positive electrode shelf portion 5 is formed by welding the lugs, provided on the upper portions of the respective positive electrode plates 3, to each other by a cast-on-strap method or a burning method. The negative electrode shelf portion 6 is also formed by welding the lugs, provided on the upper portions of the respective negative electrode plates 2, to each other in accordance with the case of the positive electrode shelf portion 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

The lead-acid battery according to the present invention will be described below.
(1) A negative electrode plate for a lead-acid battery, including a negative electrode current collector and a negative electrode material,
   where the negative electrode current collector includes: a frame rib part with an ear; and a grid part provided to be continuous with the frame rib part,
   the grid part has a plurality of quadrangular grids,
   the quadrangular grid has a pair of first vertexes with a diagonal line in a first direction from the frame rib part toward the grid part, and a pair of second vertexes with a diagonal line in a second direction intersecting the first direction,
   the angle θ made by two sides that form the second vertex is 55° or more and 100° or less, and
   the negative electrode material contains an organic condensate.
(2) The negative electrode plate for a lead-acid battery according to (1) mentioned above, where the width of the quadrangular grid on the inside in the second direction is 11 mm or more and 22.5 mm or less.
(3) The negative electrode plate for a lead-acid battery according to (1) or (2) mentioned above, where the negative current collector is an expanded grid with the first direction as a grid deployment direction.
(4) The negative electrode plate for a lead-acid battery according to any one of (1) to (3) mentioned above, where, in a cross section perpendicular to the length direction of any one of four grid ribs that surround the rectangular grid, the ratio: y/x of y to x is 0.8 or more and 1.4 or less, where the length per side of two sides corresponding to the thickness of the negative current collector is defined as x, and the length per side of the other two sides is defined as y.
(5) The negative electrode plate for a lead-acid battery according to any one of (1) to (4) mentioned above, where the organic condensate includes a unit of an aromatic compound, and
   the aromatic compound has a sulfur-containing group.
(6) The negative electrode plate for a lead-acid battery according to (5) mentioned above, where the aromatic compound contains at least one selected from the group consisting of a bis-arene compound and a monocyclic compound.
(7) The negative electrode plate for a lead-acid battery according to (6) mentioned above, where the aromatic compound contains both a bis-arene compound and a monocyclic compound.
(8) The negative electrode plate for a lead-acid battery according to (6) or (7) mentioned above, where the bis-arene compound contains a bisphenol compound.
(9) The negative electrode plate for a lead-acid battery according to (8) mentioned above, where the bisphenol compound contains at least one selected from the group consisting of a bisphenol A and a bisphenol S.
(10) The negative electrode plate for a lead-acid battery according to any one of (6) to (9) mentioned above, where the monocyclic compound contains a hydroxy arene compound.
(11) The negative electrode plate for a lead-acid battery according to (10) mentioned above, where the hydroxy arene compound contains a phenol sulfonic acid compound.
(12) The negative electrode plate for a lead-acid battery according to any one of (1) to (11) mentioned above, where the organic condensate has a sulfur element content of 2,000 µmol/g or more.
(13) A lead-acid battery including:
   the negative electrode plate for a lead-acid battery according to any one of (1) to (12);
   a positive electrode plate; and
   an electrolyte solution containing sulfuric acid.

### [Example]

Hereinafter, the present invention will be specifically described on the basis of examples and comparative examples, but the present invention is not limited to the following examples.

### «Lead-acid batteries E1 to E6 and ER1»

### (a) Preparation of negative electrode plate

As the negative current collector, an expanded grid made of a Pb-Ca-Sn alloy as shown in Figs. 1 and 2 is prepared. In the quadrangular grid of the grid part of the expanded grid, the angle θ made by two sides that form the second vertex is the angle (50° to 100°) shown in Table 1. In addition, the width L of the quadrangular grid on the inside in the second direction is the length (22.5 mm to 15.9 mm) shown in Table 1. The mass of the expanded grid was made constant.

Lead powder as raw material, barium sulfate, carbon black, and an organic expander are mixed with an appropriate amount of a sulfuric acid aqueous solution to obtain a negative electrode paste. In this case, the components are mixed so that the content of the organic expander in the negative electrode material, which is determined by the procedure described above, is 0.1% by mass, the content of barium sulfate is 0.6% by mass, and the content of carbon black is 0.3% by mass. A mesh portion of an expanded grid made of a Pb-Ca-Sn alloy is filled with the negative electrode paste, which is then cured and dried to obtain a non-formed negative electrode plate.

As the organic expander, the following expanders are used.

Condensate A: condensate of bisphenol S compound and phenol sulfonic acid with formaldehyde (sulfur element content: 4,000 µmol/g, Mw = 8,000

### (b) Preparation of positive electrode plate

Lead powder as raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-formed positive electrode plate.

### (c) Preparation of test battery

Each non-formed negative electrode plate was housed in the bag-shaped separator, and an element was formed of seven non-formed negative electrode plates and six non-formed positive electrode plates per cell. Ears of the positive electrode plates and ears of the negative electrode plates were welded to the positive electrode shelf portion and the negative electrode shelf portion by a cast-on strap (COS) method. The element was inserted into a polypropylene container, and filled with an electrolyte solution, and formation was performed in the container to assemble flooded-type lead-acid batteries E1 to E6 and ER1 having a rated voltage of 12 V and a rated capacity of 30 Ah (5-hour rate capacity (capacity when discharge was performed at a current (A) of 1/5 of the numerical value of Ah described in the rated capacity)). In the container, six elements are connected in series. The specific gravity of the electrolyte solution after formation is 1.28.

Noted that the lead-acid batteries E1 to E6 are examples, whereas ER1 is a comparative example.

**[Table 1]**

| Battery No. | Organic Expander | **L (mm)** | ***θ* (° )** | CCA Performance |
|---|---|---|---|---|
| **ER1** | Condensate A | **22.5** | **50** | **104** |
| **E1** | Condensate A | **22.0** | **55** | **106** |
| **E2** | Condensate A | **21.5** | **60** | **108** |
| **E3** | Condensate A | **20.3** | **70** | **111** |
| **E4** | Condensate A | **19.0** | **80** | **114** |
| **E5** | Condensate A | **17.5** | **90** | **116** |
| **E6** | Condensate A | **15.9** | **100** | **115** |

### «Lead-acid batteries C1 to C6 and CR1»

Lead-acid batteries C1 to C6 and CR1 are prepared similarly to the lead-acid batteries E1 to E6 and ER1 as shown in Table 2, except for the use of lignin (Sulfur element content: 600 µmol/g, Mw = 5,500) instead of the condensate A in the preparation of the negative electrode plate. Note that the lead-acid batteries C1 to C6 and CR1 are all comparative examples.

**[Table 2]**

| Battery No. | Organic Expander | **L (mm)** | ***θ* (° )** | CCA Performance |
|---|---|---|---|---|
| **CR1** | Lignin | **22.5** | **50** | **100** |
| **C1** | Lignin | **22.0** | **55** | **101** |
| **C2** | Lignin | **21.5** | **60** | **102** |
| **C3** | Lignin | **20.3** | **70** | **103** |
| **C4** | Lignin | **19.0** | **80** | **104** |
| **C5** | Lignin | **17.5** | **90** | **103** |
| **C6** | Lignin | **15.9** | **100** | **104** |

### [Evaluation]

The CCA performance of each battery is evaluated. Specifically, in accordance with JIS D 5301:2006, the 30-second terminal voltage after the start of discharge is measured according to the already described procedure. The startability is higher as the voltage is increased.

The CCA performance of each battery is evaluated by the ratio (%) obtained when the measurement value of the lead-acid battery CR1 is regarded as 100.

### «Lead-acid batteries ER2 to ER4»

In the quadrangular grid of the grid part of the expanded grid, the angle θ made by the two sides that form the second vertex is made constant at 50°, and the width L of the quadrangular grid on the inside in the second direction is regarded as the length (22.5 mm to 8 mm) shown in Table 3. The mass of the expanded grid of each battery is shown in Table 3 as a relative value obtained when the grid of the battery ER1 is regarded as 100. Besides, lead-acid batteries ER2 to ER4 are prepared similarly to the lead-acid battery ER1. Note that the lead-acid batteries ER2 to ER4 are all comparative examples.

**[Table 3]**

| Battery No. | Organic Expander | **L (mm)** | Grid Mass | ***θ* (° )** | CCA Performance |
|---|---|---|---|---|---|
| **ER1** | Condensate A | **22.5** | **100** | **50** | **104** |
| **ER2** | Condensate A | **16.0** | **122** | **50** | **116** |
| **ER3** | Condensate A | **11.0** | **158** | **50** | **124** |
| **ER4** | Condensate A | **8.0** | **200** | **50** | **130** |

### «Lead-acid batteries CR2 to CR4»

In the quadrangular grid of the grid part of the expanded grid, the angle θ made by the two sides that form the second vertex is made constant at 50°, and the width L of the quadrangular grid on the inside in the second direction is regarded as the length (22.5 mm to 8 mm) shown in Table 3. The mass of the expanded grid of each battery is shown in Table 4 as a relative value obtained when the grid of the battery CR1 (ER1) is regarded as 100. Besides, lead-acid batteries CR2 to CR4 are prepared similarly to the lead-acid battery CR1. Note that the lead-acid batteries CR2 to CR4 are all comparative examples.

**[Table 4]**

| Battery No. | Organic Expander | **L (mm)** | Grid Mass | ***θ* (° )** | CCA Performance |
|---|---|---|---|---|---|
| **CR1** | Lignin | **22.5** | **100** | **50** | **100** |
| **CR2** | Lignin | **16.0** | **122** | **50** | **111** |
| **CR3** | Lignin | **11.0** | **158** | **50** | **120** |
| **CR4** | Lignin | **8.0** | **200** | **50** | **127** |

### <<Lead-acid batteries E7 to E11>>

In the quadrangular grid of the grid part of the expanded grid, the angle θ made by the two sides that form the second vertex is made constant at 80°, and the width L of the quadrangular grid on the inside in the second direction is regarded as the length (22.5 mm to 8 mm) shown in Table 5. The mass of the expanded grid of each battery is shown in Table 5 as a relative value obtained when the grid of the battery E8 is regarded as 100. Besides, lead-acid batteries E7 to E11 are prepared similarly to the lead-acid battery E4. Note that the lead-acid batteries E7 to E11 are all examples.

**[Table 5]**

| Battery No. | Organic Expander | **L (mm)** | Grid Mass | ***θ* (° )** | CCA Performance | |
|---|---|---|---|---|---|---|
| **E7** | Condensate A | **22.5** | **91** | **80** | **108** | |
| **E8** | Condensate A | **19.0** | **100** | **80** | **114** | |
| **E9** | Condensate A | **16.0** | **110** | **80** | **120** | |
| **E10** | Condensate A | **11.0** | **140** | **80** | **128** | |
| **E11** | Condensate A | **8.0** | **176** | **80** | **129** | |

### <<Lead-acid batteries C7 to C11>>

In the quadrangular grid of the grid part of the expanded grid, the angle θ made by the two sides that form the second vertex is made constant at 80°, and the width L of the quadrangular grid on the inside in the second direction is regarded as the length (22.5 mm to 8 mm) shown in Table 6. The mass of the expanded grid of each battery is shown in Table 6 as a relative value obtained when the grid of the battery C8 is regarded as 100. Besides, lead-acid batteries C7 to C11 are prepared similarly to the lead-acid battery C4. Note that the lead-acid batteries C7 to C11 are all comparative examples.

**[Table 6]**

| Battery No. | Organic Expander | **L (mm)** | Grid Mass | ***θ* (° )** | CCA Performance |
|---|---|---|---|---|---|
| **C7** | Lignin | **22.5** | **91** | **80** | **96** |
| **C8** | Lignin | **19.0** | **100** | **80** | **104** |
| **C9** | Lignin | **16.0** | **110** | **80** | **111** |
| **C10** | Lignin | **11.0** | **140** | **80** | **123** |
| **C11** | Lignin | **8.0** | **176** | **80** | **125** |

### <<Lead-acid batteries E12 and E13>>

Lead-acid batteries E 12 and E 13 are prepared similarly to the lead-acid battery E8, as shown in Table 7, except for the use of the following condensate B or condensate C instead of the condensate A in the preparation of the negative electrode plate.

Condensate B: condensate of naphthalene compound having sulfonic acid group introduced with formaldehyde (sulfur element content: 6,000 µmol/g, Mw = 6,000)

Condensate C: condensate of bisphenol A compound having sulfonic acid group introduced and bisphenol S compound with formaldehyde (sulfur element content: 4,000 µmol/g, Mw = 9,000)

**[Table 7]**

| Battery No. | Organic Expander | **L (mm)** | ***θ* (° )** | CCA Performance |
|---|---|---|---|---|
| **C8** | Lignin | **19.0** | **80** | **104** |
| **E12** | Condensate B | **19.0** | **80** | **108** |
| **E13** | Condensate C | **19.0** | **80** | **110** |
| **E8** | Condensate A | **19.0** | **80** | **114** |

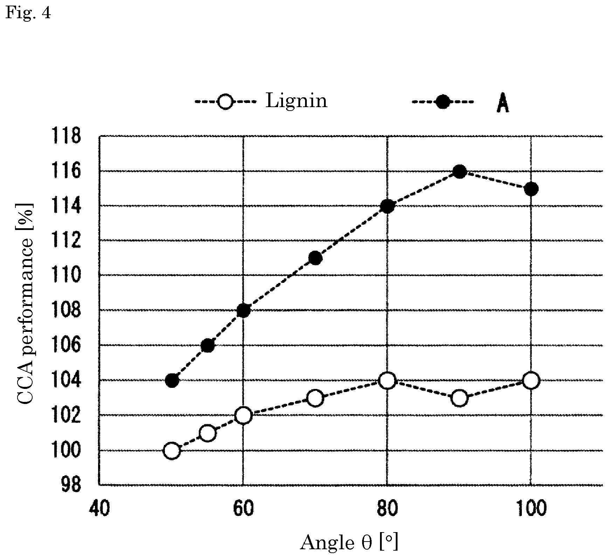

FIG. 4 shows the results of Tables 1 and 2 together. In general, when the angle θ is larger than 50°, the quadrangular grid accordingly becomes closer to a square, and the binding force between the negative current collector and the negative electrode material is predicted to be decreased, thereby negatively affecting the current collection efficiency, and degrading the CCA performance. In particular, in the case of the expanded grid has, the stress remaining in the negative current collector is believed to be increased as the angle θ is increased, thereby significantly affecting the efficiency. In practice, however, even in the case where the angle θ is increased to 55° or more as shown in Fig. 4, the CCA performance can be improved as long as the angle θ is 100° or less. Further, in the case of using the condensate A that is an organic condensate, the CCA performance is remarkably improved when the angle θ is increased to 55° or more. In particular, in the region of θ = 60° to 100°, the CCA performance is improved only by less than 2% from 102 to 104 in the case of using the lignin, whereas the CCA performance is improved by 6.5% or more from 108 to 115 in the case of using the condensate A.

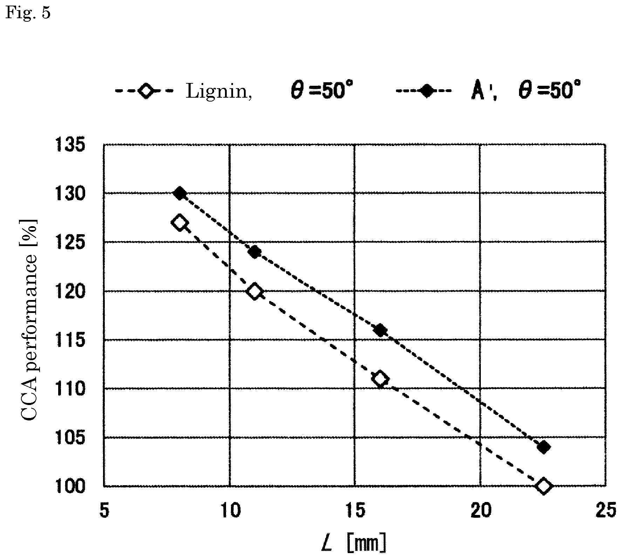

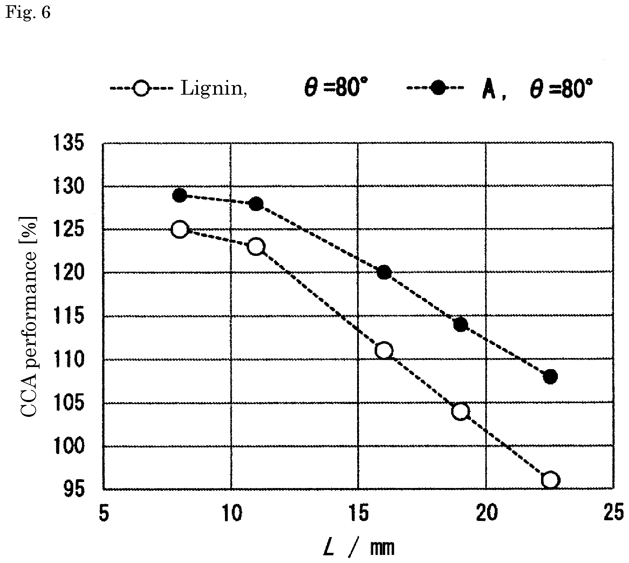

FIG. 5 shows the results of Tables 3 and 4 together, and FIG. 6 shows the results of Tables 5 and 6 together. Fig. 5 shows that in the case where the angle θ is 50°, as the width L is increased, the CCA performance is reduced uniformly at the same rate in both the case of using the lignin and the case of using the condensate A. In contrast, in the case where the angle θ is 80°, as the width L is increased to 11 mm or more, the degradation in CCA performance is greatly suppressed in the case of using the condensate A, as compared with the case of using the lignin. Further, the degree of suppression is more remarkable as the width L is larger. This tendency indicates that as the angle θ is larger, and as the grid is larger, the difference in binding force between the negative current collector and the negative electrode material with reference to the difference of the organic condensate is more remarkably produced, thereby enhancing the effect of reducing the voltage drop in the current collection path.

Next, Table 7 shows that as the organic condensate, the condensate A is most desirable, the condensate C is next desirable, and the condensate B is next desirable. Such an order is presumed to be affected by the sulfur content in and molecular weight of the organic expander. The sulfur element content of the lignin is 600 pmol/g, whereas the sulfur element contents of the condensates A, B, and C are all 2,000 pmol/g or more. In addition, the condensate A contains units of both a bis-arene compound and a monocyclic compound (in particular, a hydroxy arene compound), and the condensate C contains units of a bis-arene compound. Such a structural difference is believed to result in a difference in binding force between the negative current collector and the negative electrode material, thereby largely affecting the order in Table 7.

### INDUSTRIAL APPLICABILITY

The lead-acid battery according to the present invention can be suitably used as, for example, a power source for starting a vehicle (automobiles, motorcycles, etc.) and a power source for an industrial energy storage apparatus (electric vehicles (forklifts, etc.), etc.). In addition, the lead-acid battery is also useful as a lead-acid battery for IS that is charged and discharged under a PSOC (Partial state of charge) condition. The lead-acid battery for IS is suitable for an idling stop vehicle. Note that these applications are merely illustrative and not limited to these applications.

### DESCRIPTION OF REFERENCE SIGNS

1: lead-acid battery
2: negative electrode plate
3: positive electrode plate
4: separator
5: positive electrode shelf portion
6: negative electrode shelf portion
7: positive pole
8: penetrating connection body
9: negative pole
11: element
12: container
13: partition
14: cell chamber
15: lid
16: negative electrode terminal
17: positive electrode terminal
18: vent plug
20: expanded grid
21: ear
22: upper frame rib part
23: lower frame rib part
24: grid part

## Claims

1. A negative electrode plate for a lead-acid battery, comprising: a negative electrode current collector and a negative electrode material,
wherein the negative electrode current collector includes: a frame rib part with an ear; and a grid part provided to be continuous with the frame rib part,
the grid part has a plurality of quadrangular grids,
the quadrangular grid has a pair of first vertexes with a diagonal line in a first direction from the frame rib part toward the grid part, and a pair of second vertexes with a diagonal line in a second direction intersecting the first direction,
an angle θ made by two sides that form the second vertex is 55° or more and 100° or less, and
the negative electrode material contains an organic condensate.

2. The negative electrode plate for a lead-acid battery according to claim 1, wherein a width of the quadrangular grid on an inside in the second direction is 11 mm or more and 22.5 mm or less.

3. The negative electrode plate for a lead-acid battery according to claim 1 or 2, wherein the negative current collector is an expanded grid with the first direction as a grid deployment direction.

4. The negative electrode plate for a lead-acid battery according to any one of claims 1 to 3, wherein, in a cross section perpendicular to a length direction of any one of four grid ribs that surround the rectangular grid, a ratio: y/x of y to x is 0.8 or more and 1.4 or less, where a length per side of two sides corresponding to a thickness of the negative current collector is defined as x, and a length per side of the other two sides is defined as y.

5. The negative electrode plate for a lead-acid battery according to any one of claims 1 to 4, wherein the ratio y/x of y to x is 0.85 or more.

6. The negative electrode plate for a lead-acid battery according to any one of claims 1 to 5, wherein the ratio y/x of y to x is 1.1 or less.

7. The negative electrode plate for a lead-acid battery according to any one of claims 1 to 6, wherein
the organic condensate comprises a unit of an aromatic compound, and
the aromatic compound has a sulfur-containing group.

8. The negative electrode plate for a lead-acid battery according to claim 7, wherein the aromatic compound comprises at least one selected from the group consisting of a bis-arene compound and a monocyclic compound.

9. The negative electrode plate for a lead-acid battery according to claim 8, wherein the aromatic compound comprises both a bis-arene compound and a monocyclic compound.

10. The negative electrode plate for a lead-acid battery according to claim 8 or 9, wherein the bis-arene compound comprises a bisphenol compound.

11. The negative electrode plate for a lead-acid battery according to claim 10, wherein the bisphenol compound comprises at least one selected from the group consisting of a bisphenol A and a bisphenol S.

12. The negative electrode plate for a lead-acid battery according to any one of claims 8 to 11, wherein the monocyclic compound comprises a hydroxy arene compound.

13. The negative electrode plate for a lead-acid battery according to claim 12, wherein the hydroxy arene compound comprises a phenol sulfonic acid compound.

14. The negative electrode plate for a lead-acid battery according to any one of claims 1 to 13, wherein the organic condensate has a sulfur element content of 2,000 pmol/g or more.

15. The negative electrode plate for a lead-acid battery according to any one of claims 1 to 14, wherein the organic condensate has a sulfur element content of 3,000 pmol/g or more.

16. The negative electrode plate for a lead-acid battery according to any one of claims 1 to 15, wherein the organic condensate has a sulfur element content of 9,000 pmol/g or less.

17. The negative electrode plate for a lead-acid battery according to claim 9, wherein
the aromatic compound as a base for an aromatic compound unit comprises both a bis-arene compound and a monocyclic compound, and
a molar ratio between the bis-arene compound and the monocyclic compound falls within a range of 1 : 9 to 9 : 1.

18. The negative electrode plate for a lead-acid battery according to claim 9, wherein
the aromatic compound as a base for an aromatic compound unit comprises both a bis-arene compound and a monocyclic compound, and
a molar ratio between the bis-arene compound and the monocyclic compound falls within a range of 2 : 8 to 8 : 2.

19. The negative electrode plate for a lead-acid battery according to any one of claims 1 to 18, wherein a nitrogen atom-containing group in the organic condensate has a content of 1% by mass or less.

20. The negative electrode plate for a lead-acid battery according to any one of claims 1 to 19, wherein the organic condensate has a weight average molecular weight (Mw) of 7,000 or more and 100,000 or less.

21. The negative electrode plate for a lead-acid battery according to any one of claims 1 to 20, wherein the organic expander contained in the negative electrode material has a content of 0.01% by mass or more and 1.0% by mass or less.

22. A lead-acid battery comprising:
the negative electrode plate for a lead-acid battery according to any one of claims 1 to 21;
a positive electrode plate; and
an electrolyte solution comprising a sulfuric acid.
